# EUROPÄISCHE PATENTSCHRIFT

(11) **EP 0 792 555 B1**
(45) Veröffentlichungstag und Bekanntmachung des Hinweises auf die Patenterteilung: **20.01.1999**
(21) Anmeldenummer: 95936565.1
(22) Anmeldetag: 28.10.1995
(51) Int. Cl.: H04N 5/335, H04N 3/15, G01S 7/491

(54) **VORRICHTUNG UND VERFAHREN ZUR DETEKTION UND DEMODULATION EINES INTENSITÄTSMODULIERTEN STRAHLUNGSFELDES**
DEVICE AND METHOD FOR THE DETECTION AND DEMODULATION OF AN INTENSITY-MODULATED RADIATION FIELD
DISPOSITIF ET PROCEDE POUR LA DETECTION ET LA DEMODULATION D'UN CHAMP DE RAYONNEMENT MODULE EN INTENSITE

(30) Priorität: 14.11.1994 DE 4440613
(43) Veröffentlichungstag der Anmeldung: 03.09.1997
(73) Patentinhaber: Leica Geosystems AG, 9435 Heerbrugg (CH)
(72) Erfinder: SPIRIG, Thomas, CH-8307 Effretikon (CH); SEITZ, Peter, CH-8700 Küsnacht (CH)
(74) Vertreter: Stamer, Harald
(86) Internationale Anmeldenummer: EP9504235
(87) Internationale Veröffentlichungsnummer: WO9615626

(56) Entgegenhaltungen:
- EP-A- 0 604 282
- EP-A- 0 605 282
- WO-A-92/00549
- US-A- 4 780 605
- US-A- 4 878 116
- BULLETIN DES SCHWEIZERISCHEN ELEKTROTECHNISCHEN VEREINS & DES VERBANDES SCHWEIZERISCHER ELEKTRIZITÄTSWERKE, Bd. 84, Nr. 17, 27.August 1993 ZÜRICH, CH, Seiten 17-23, PETER SEITZ 'von der elektronischen Fotographie zum sehenden Chip'

## Beschreibung

Die Erfindung betrifft eine Vorrichtung und ein Verfahren zur Detektion und Demodulation eines intensitätsmodulierten Strahlungsfeldes gemäß den Ansprüchen 1 bzw. 8.

Das Verhalten vieler Systeme in der Technik wird unter anderem mit Hilfe von modulierten Signalen untersucht. Das System wird dabei mit einem modulierten, beispielsweise einem sinusförmigen Signal angeregt, wobei die Antwort des Systems gemessen wird. Als charakteristische Größen werden die Modulation der erhaltenen Systemantwort, ihre Phasenverschiebung gegenüber dem anregenden Signal und der Hintergrunds-Signalpegel (Offset) bestimmt.

Bei bekannten Halbleiter-Bildsensoren werden zweidimensionale Verteilungen der Lichtintensität in zweidimensionale Photostromdichte-Verteilungen umgewandelt. In sogenannten Pixeln werden die lichtgenerierten Signalladungen zeitlich aufintegriert. Beispielsweise ist aus der DE 39 09 394 C2 ein CCD-Bildsensor bekannt, bei dem die generierten Ladungsmuster während der Belichtung lateral verschoben werden. Hierdurch soll das Auftreten von Bewegungsunschärfen bei der Aufnahme von relativ zum Bildsensor bewegten Objekten vermieden werden.

Zur Anwendung in abtastfreien, bildgebenden Laser-Radar 3D Kameras ist ein Verfahren bekannt, bei dem moduliertes Licht auf einen herkömmlichen Bildsensor abgebildet wird (Laser-Radar Imaging Without Scanners, Photonics Spectra, pp. 28. April 1994). Die Demodulation erfolgt mit einem bilderhaltenden, zeitlich variablen Verstärkerelement zwischen dem Abbildungsobjektiv und dem Halbleiterbildsensor. Das Verstärkerelement ist als Microchannel-Plate (MCP) ausgeführt, wobei es mit Hochspannungen von 100 bis 1000 Volt betrieben werden muß. Das ankommende Licht wird zeitlich moduliert in dem Verstärkerelement absorbiert und gelangt dann auf den Bildsensor, wobei dieser nur die Funktion des Integrators hat. Es können dabei drei oder mehr Bilder aufgenommen werden, wobei ein erheblicher Lichtverlust durch Absorption in dem Verstärkerelement in Kauf genommen werden muß. Außerdem müssen die Bilder zwischen den Aufnahmen vollständig aus dem Bildsensor ausgelesen werden.

Außerdem ist ein CCD-Bildsensor für die Demodulation von zeitlich verschieden polarisiertem Licht bekannt (H. Povel, H. Aebersold, J. O. Stenflo, "Charge-coupled device image sensors as a demodulator in a 2-D polarimeter with a piezoelastic modulator", Applied Optics, Vol. 29, pp. 1186-1190, 1990). Dazu wird ein Modulator zwischen dem Objektiv und dem CCD-Bildsensor angeordnet, der in schneller Folge die Polarisation des Lichtes zwischen zwei Zuständen umschaltet. Die zwei entstehenden Bilder der zwei Polarisationszustände werden in dem Bildsensor akkumuliert und gespeichert. Dazu wird ein bekannter Bildsensor mit einer Streifenmaske versehen, welche jede zweite Bildsensor-Zeile lichtdicht abdeckt. Auf diese Weise kann man durch vertikales Auf- und Abschieben des Bild-Ladungsmusters das Bild des jeweiligen Polarisationszustandes im richtigen Takt akkumulieren.

Aufgabe der vorliegenden Erfindung ist es, eine Vorrichtung und ein Verfahren zur Detektion und Demodulation eines intensitätsmodulierten Strahlungsfeldes anzugeben, so daß die Bestimmung einer Mehrzahl von Parametern des modulierten Strahlungsfeldes gewährleistet ist.

Die Aufgabe wird durch die in dem Anspruch 1 (Vorrichtungsanspruch) und dem Anspruch 8 (Verfahrensanspruch) aufgeführten Merkmalen gelöst.

Die mit der Erfindung erzielten Vorteile bestehen insbesondere darin, daß ein sich in ein- oder zweidimensionaler Richtung erstreckender Bildsensor geschaffen wird, der eine Mehrzahl von Sensorelementen aufweist, die jeweils geeignet sind, einerseits die modulierte Strahlung zu detektieren und andererseits die Demodulation derselben durchzuführen. Ein Taktgenerator ermöglicht, daß die jeweils in den Sensorelementen ausgeführte Demodulation synchron zum von der Strahlungsquelle ausgesendeten Modulationssignal erfolgt, so daß nach dem Auslesen der Meßwerte aus der erfindungsgemäßen Vorrichtung die Parameter des detektierten Strahlungsfeldes ortsabhängig bestimmt werden können.

Vorzugsweise besteht die erfindungsgemäße Vorrichtung aus einer Mehrzahl von Sensoreinheiten, die sich in zweidimensionaler Richtung erstrecken. Sie kann dann mit Vorteil für bildgebende interferometrische Meßmethoden benutzt werden, wobei bei der Aufnahme der Bilder nach dem Heterodynverfahren zeitlich modulierte Bildsignale auftreten. Daneben kann die erfindungsgemäße Vorrichtung auch aus einem einzigen Sensorelement bestehen, so daß eine punktweise Messung erfolgen kann.

Jedes Sensorelement weist mindestens eine Speicherzelle auf, die eine Aufaddierung der in einem lichtempfindlichen Teil des Sensorelements detektierten Ladungen ermöglicht. Hierdurch wird die Detektion von Signalen geringer Intensität gewährleistet.

Nach einer bevorzugten Ausführung wird ein sinusförmiges Strahlungsfeld detektiert und demoduliert. Mit einer Anzahl von vier Abtastungen je Periode lassen sich die Amplitude, die Phase und das Hintergrundlicht des Strahlungsfeldes bestimmen. Mit Erhöhung der Abtastrate lassen sich weitere Parameter des detektierten Strahlungsfeldes gewinnen, wie z.B. die Bestimmung von Fourierkoeffizienten.

Ausführungsbeispiele der Erfindung werden nachfolgend anhand der Zeichnung näher erläutert.

Es zeigen:
- Fig. 1: ein Blockschaltbild der erfindungsgemäßen Vorrichtung,
- Fig. 2: ein Strukturbild des Bildsensors nach einem ersten Ausführungsbeispiel,
- Fig. 3: ein Strukturbild des Bildsensors nach einem zweiten Ausführungsbeispiel,
- Fig. 4: ein zeitlicher Verlauf einer detektierten, sinusförmigen Modulationssignals.

Die Erfindung läßt sich vorteilhafterweise zur Enffemungsmessung einsetzen. Die Laufzeit eines von einer Strahlungsquelle ausgesendeten modulierten Lichtpulses, der an dem Meßobjekt reflektiert wird und von der erfindungsgemäßen Vorrichtung detektiert wird, kann durch die Ermittlung der Phasendifferenz des modulierten Lichtes bestimmt werden. Weiterhin bietet die Erfindung die Möglichkeit, gleichzeitig Bildinformationen des Meßobjekts aufzunehmen. Als bevorzugte Anwendungsgebiete der Erfindung ergeben sich daher die Autosensorik und die Robotik.

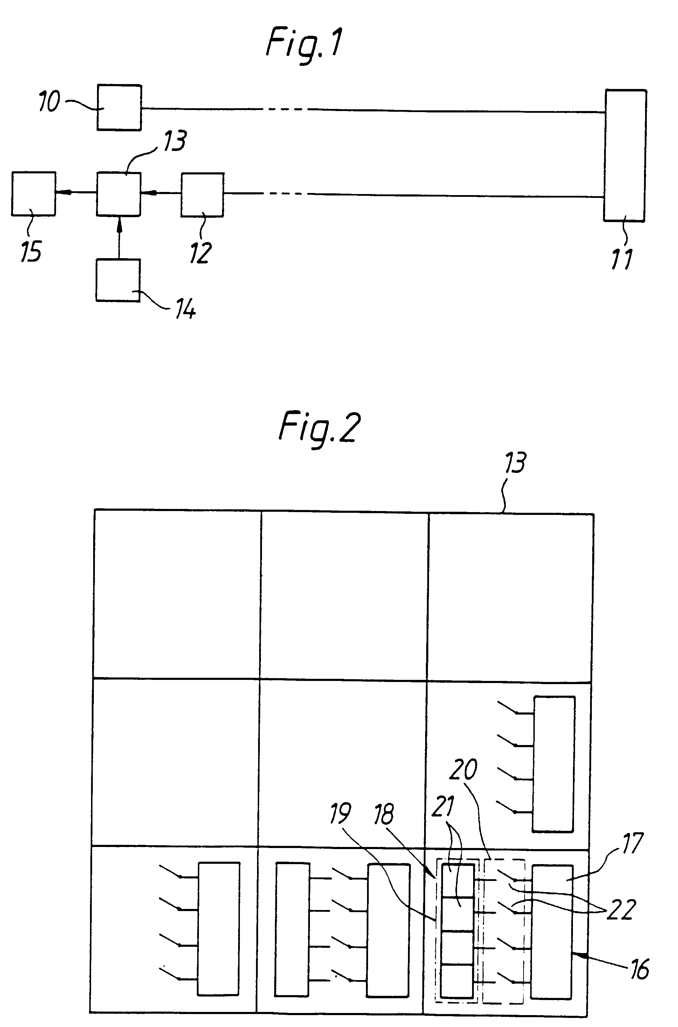

Die im folgenden beschriebenen Ausführungsbeispiele dienen dazu, die Phase, den Scheitelwert und den Hintergrund-Lichtpegel des detektierten Strahlungsfeldes zu bestimmen. Als Strahlungsquelle zur Aussendung eines Modulationssignals dient eine Laser 10, der auf eine Meßobjekt 11 gerichtet ist (siehe Fig. 1). Das an dem Meßobjekt 11 reflektierte Strahlungsfeld wird mit einer herkömmlichen Optik 12 auf einem Bildsensor 13 der Vorrichtung abgebildet. Ein Taktgenerator 14 dient zur Steuerung der in dem Bildsensor 13 aufgenommenen Signale und führt sie nach erfolgter Detektion und Demodulation in dem Bildsensor 13 einer Auswerteeinheit 15 zu, in der die Meßwerte berechnet und einer nicht dargestellten Anzeigeeinheit weitergeleitet werden.

Nach einem ersten Ausführungsbeipiel gemäß Fig.2 besteht der Bildsensor 13 aus neun gleichartig aufgebauten Sensorelementen 16, die zusammen ein 3 x 3-Bildsensorfeld bilden. Jedes Sensorelement 16 besteht aus einem lichtempfindlichen Teil 17, auf den das intensitätsmodulierte Strahlungsfeld auftrifft und entsprechend der Intensität desselben eine Anzahl von Signalladungen erzeugt werden. Der lichtempfindliche Teil 17 des Sensorelements 16 ist als Photodiode ausgebildet. Alternativ kann der lichtempfindliche Teil 17 als MOS-Kondensator ausgebildet sein.

Desweiteren weist das Sensorelement 16 einen lichtunempfindlichen Teil 18 auf, der aus einem Speicherbereich 19 und einem Schalterbereich 20 besteht.

Der Speicherbereich 19 und der Schalterbereich 20 enthalten jeweils die gleiche Anzahl von Speicherzellen 21 bzw. elektrischen Schaltern 22, wobei deren Anzahl der Zahl der in dem lichtempfindlichen Teil 17 je Periode durchgeführten Intergrationen der Strahlung entspricht. Die Speicherzellen 21 können jeweils als CCD-Pixel oder CMOS-Kondensatoren ausgebildet sein. Die elektrischen Schalter 22 sind als Transistor-Schalter oder als CCD-Gates ausgebildet.

Die Übertragung der in dem lichtempfindlichen Teil 17 aufintegrierten Ladungen in den Speicherbereich 19 erfolgt durch sequentielle Ansteuerung der elektrischen Schalter 22. Zu diesem Zweck werden die elektrischen Schalter 22 von dem Taktgenerator 14 derart gesteuert, daß zu einem bestimmten Zeitpunkt der erste Schalter 22 geschlossen wird, damit der Inhalt des lichtempfindlichen Teils 17 in eine erste Speicherzelle 21 abgespeichert wird. Nach Öffnung des ersten Schalters und Ablauf einer kurzen festgelegten Zeitspanne wird der zweite Schalter 22 geschlossen, damit die nächste in dem lichtempfindlichen Teil 17 aufintegrierte Ladungsmenge in die zweite Speicherzelle 21 übertragen werden kann. Dieser Schaltungsablauf setzt sich fort, bis der letzte Schalter geschlossen und wieder geöffnet worden ist. Danach kann die Durchschaltung der Ladungen von dem lichtempfindlichen Teil 17 in die Speicherzellen 21 von vorne beginnen, wobei jeweils der Inhalt der Speicherzellen 21 zeitsynchron zu dem von dem Laser 10 ausgesendeten Modulationssignal aufaddiert wird.

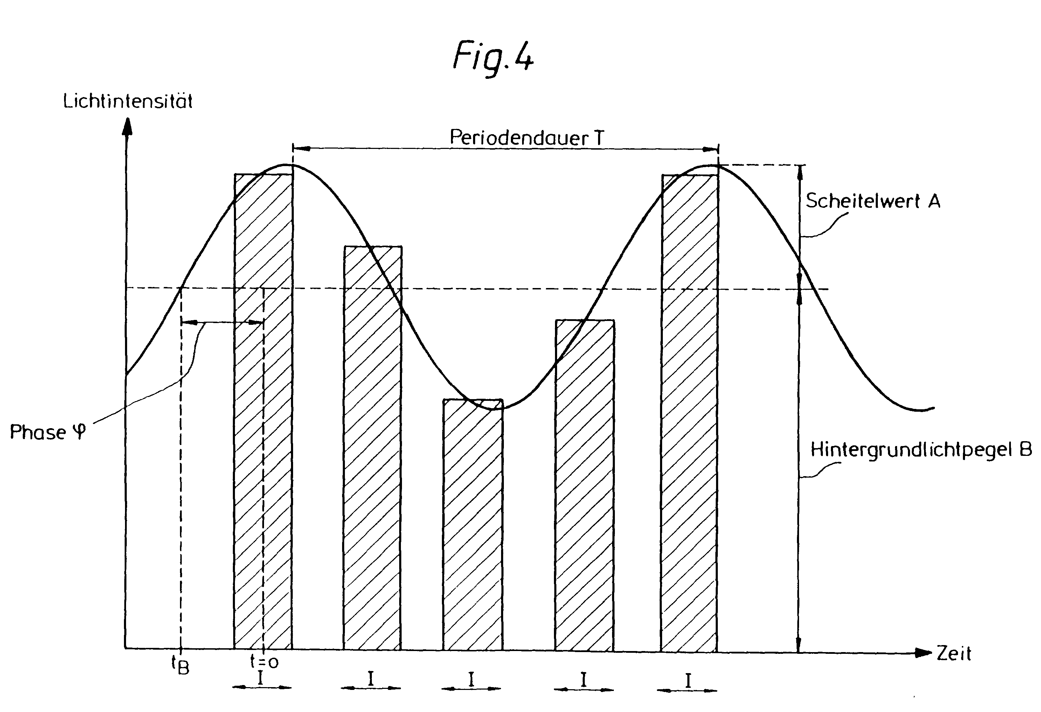

Gemäß Fig.4 wird ein sinusförmiges Strahlungssignal detektiert. Zu diesem Zweck werden in dem lichtempfindlichen Teil 17 innerhalb einer Periodendauer T des Strahlungssignals viermal die Ladungen jeweils innerhalb eines Intergrationsintervalles I aufintegriert. Die Integrationsintervalle sind aquidistant und in gleichen Abständen zueinander verteilt. Nach sequentieller Übertragung der Ladungsmengen über die jeweils zugeordneten Schalter 22 in die Speicherzellen 21 und wiederholter Aufaddierung derselben in den Speicherzellen 21 werden die ladungsproportionalen Meßwerte aus dem Speicherbereich 20 in eine Auswerteeinheit 15 weitergeleitet, in der die Parameter des detektierten Strahlungssignals berechnet werden.

Wie aus Fig.4 zu ersehen, werden folgende Parameter ortsabhängig gemessen. Es läßt sich die Phasendifferenz φ zwischen dem detektierten Strahlungssignal und dem ausgesendeten Modulationsignal bestimmen, so daß die Entfernung zu dem Meßobjekt 11 ermittelt werden kann. Als Zeitbezugspunkt dient der Zeitpunkt t_{B} des Scheitelwertes des Modulationssignals. Desweiteren kann aus dem demodulierten Strahlungssignal ein Scheitelwert A und ein Hintergrundlichtpegel B bestimmt werden.

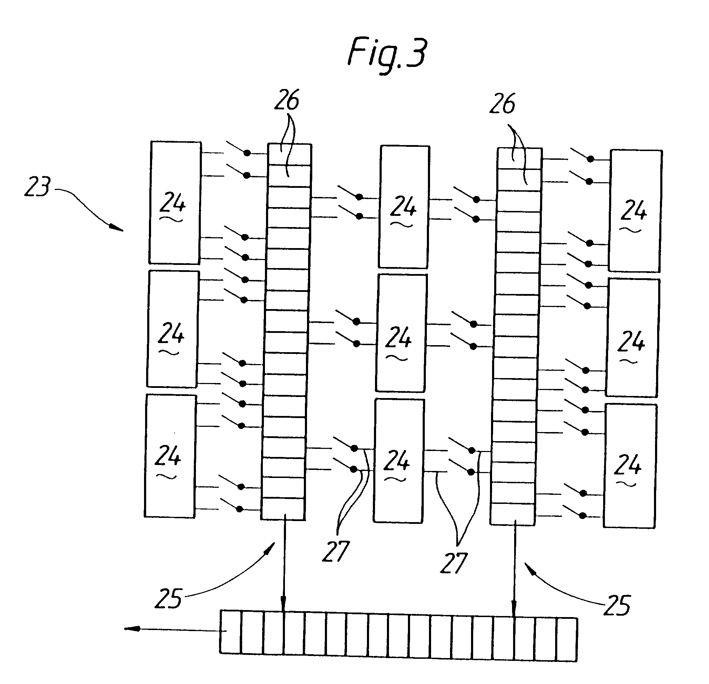

Nach einem zweiten Ausführungsbeispiel gemäß Fig.3 ist ein Bildsensor 23 ausschließlich in CCD-Technik ausgebildet. Der Bildsensor 23 besteht aus einem Feld von 3 x 3 rückwärts vorgespannten MOS-Kondensatoren 24 als lichtempfindlicher Teil des Bildsensors 23. Zwischen den lichtempfindlichen MOS-Kondensatoren 24 sind vertikale CCD-Bereiche 25 angeordnet, die jeweils aus Speicherzellen 26 bestehen. Zur Abtastung von vier Ladungen je Periode ist jeder lichtempfindliche MOS-Kondensator 24 über vier Transfer-Gates 27 als elektrische Schalter mit vier Speicherzellen 26 verbunden. Ein nicht dargestellter Taktgenerator steuert die Durchschaltung der Signalladungen von den MOS-Kondensatoren 24 in die vertikalen CCD-Bereiche 25 und nachfolgend die Übertragung der Signalladungen von den vertikalen CCD-Bereichen 25 in einen horizontalen CCD-Bereich 28. Von dort werden die Signalladungen einer Auswerteeinheit zur Bestimmung der Meßwerte zugeführt.

Alternativ können die CCD-Bereiche auch kreisbogenförmig ausgebildet sein, wobei die CCD-Bereiche jeweils die MOS-Kondensatoren 24 umschließen.

## Patentansprüche

1. Vorrichtung zur Detektion und Demodulation eines intensitätsmodulierten Strahlungsfeldes mit folgenden Merkmalen:
- einen Bildsensor (13,23) bestehend aus einer ein- oder zweidimensionalen Anordnung von Sensorelementen (16),
- jedes Sensorelement (16) besteht aus einem lichtempfindlichen Teil (17) zur Umsetzung des Strahlungssignals in ein elektrisches Signal und einem lichtunempfindlichen Teil (18) mit mindestens einem elektrischen Schalter (22) und mit mindestens einer jeweils dem Schalter (22) zugeordneten Speicherzelle (21,26),
- einen Taktgenerator (14) zur Steuerung der elektrischen Schalter (22) derart, daß die in dem lichtempfindlichen Teil (17) erzeugten Signalladungen synchron zu einem von einer Strahlungsquelle erzeugten Modulationssignal in die Speicherzellen (21,26) durchgeschaltet werden, und zur Steuerung der Speicherzellen (21,26), so daß die jeweils in den Speicherzellen (21,26) gespeicherten Meßwerte in eine Auswerteeinheit (15) zur Auswertung der Meßwerte übertragen werden.

2. Vorrichtung nach Anspruch 1, **dadurch gekennzeichnet,** daß der Bildsensor (13,23) einstückig ausgebildet ist, wobei die Sensorelemente (16) unmittelbar nebeneinander liegend ein ein- oder zweidimensionales Feld bilden.

3. Vorrichtung nach einem der Ansprüche 1 oder 2, **dadurch gekennzeichnet**, daß der lichtempfindliche Teil (17) des Sensorelements (16) als eine Photodiode oder als ein mit einer Vorspannung versehener MOS-Kondensator (24) ausgebildet ist.

4. Vorrichtung nach einem oder mehreren der Ansprüche 1 bis 3, **dadurch gekennzeichnet**, daß die Speicherzelle (21) als ein von Licht geschütztes CCD-Pixel oder als ein MOS-Kondensator ausgebildet ist.

5. Vorrichtung nach einem oder mehreren der Ansprüchel bis 4, **dadurch gekennzeichnet**, daß die Speicherzellen (26) linienförmige CCD-Bereiche (25,28), insbesondere geradlinige CCD-Bereiche (25,28), bilden, aus denen die gespeicherten Meßwerte sequentiell zu der Auswerteeinheit übertragen werden.

6. Vorrichtung nach einem oder mehreren der Ansprüche 1 bis 4, **dadurch gekennzeichnet**, daß die Speicherzellen (26) derart nebeneinander angeordnet sind, daß sie in sich geschlossene CCD-Bereiche, insbesondere kreisförmige CCD-Bereiche, bilden.

7. Vorrichtung nach einem der Ansprüchel bis 6, **dadurch gekennzeichnet**, daß der elektrische Schalter (22) als Transistor-Schalter oder als CCD-Transfer-Gate (27) ausgebildet ist.

8. Verfahren zur Detektion und Demodulation eines intensitätsmodulierten Strahlungsfeldes, wobei
- das Strahlungsfeld durch ein Optik (12) auf einen aus ein- oder zweidimensional angeordneten Sensorelementen (16) bestehenden Bildsensor (13,23) abgebildet wird,
- in einer ersten Phase in einem lichtempfindlichen Teil (17) des Sensorelements (16) nacheinander Signalladungen entsprechend der Intensität des Strahlungsfeldes erzeugt werden, wobei jeweils während eines Integrationsintervalls (1) die Signalladungen aufintegriert werden,
- die jeweils aufintegrierten Signalladungen synchron zu einem von der Strahlungsquelle erzeugten Modulationssignal in einen lichtunempfindlichen Teil (18) des Sensorelements (16) übertragen werden und jeweils in einer Speicherzelle (21,26) abgespeichert werden,
- die in dem lichtempfindlichen Teil (17) erzeugten Signalladungen sequentiell von dem lichtempfindlichen Teil des Sensorelements (16) über mindestens einen jeweils einer Speicherzelle (21,26) zugeordneten elektrischen Schalter (22) der entsprechenden Speicherzelle (21,26) zugeführt und abgespeichert werden,
- und in einer zweiten Phase die in den Speicherzellen (21,26) gespeicherten Meßwerte nacheinander ausgelesen und einer Auswerteeinheit (15) zugeführt werden.

9. Verfahren nach Anspruch 8, **dadurch gekennzeichnet**, daß ein Objekt (11) mit einem von einer Strahlungsquelle erzeugten periodischen oder pulsförmigen Modulationssignal beleuchtet wird und dieses als intensitätsmoduliertes Strahlungsfeld auf dem Bildsensor (13) zweidimensional abgebildet wird, derart, daß Informationen über die Form und/oder Struktur des Objekts vorliegen.

10. Verfahren nach Anspruch 8 oder 9, **dadurch gekennzeichnet,** daß die Signalladungen jeweils in den Speicherzellen (21,26) periodisch aufaddiert werden.

## Claims

1. Device for the detection and demodulation of an intensity-modulated radiation field, with the following features:
- an image sensor (13, 23) consisting of a one-dimensional or two-dimensional arrangement of sensor elements (16),
- each sensor element (16) consists of a light-sensitive part (17) for conversion of the radiation signal into an electrical signal and a light-insensitive part (18) with at least one electrical switch (22) and with at least one storage cell (21, 26) respectively associated with the switch (22) and
- a pulse generator (14) for the control of the electrical switches (22) in such a manner that the signal charges produced in the light-sensitive part (17) are switched through into the storage cells (21, 26) synchronously with a modulation signal produced by a radiation source and for the control of the storage cells (21, 26) so that the measurement values respectively stored in the storage cells (21, 26) are transferred into an evaluating unit (15) for evaluation of the measurement values.

2. Device according to claim 1, characterised thereby, that the image sensor (13, 23) is constructed in one piece, wherein the sensor elements (16) lying directly one beside the other form a one-dimensional or two-dimensional field.

3. Device according to one of the claims 1 and 2, characterised thereby, that the light-sensitive part (17) of the sensor element (16) is formed as a photodiode or as an MOS capacitor (24) provided with a bias voltage.

4. Device according to one or more of the claims 1 to 3, characterised thereby, that the storage cell (21) is formed as a charge-coupled device pixel protected from light or as an MOS capacitor.

5. Device according to one or more of the claims 1 to 4, characterised thereby, that the storage cells (26) form linear charge-coupled device regions (25, 28), in particular rectilinear charge-coupled device regions (25, 28), from which the stored measurement values are transmitted sequentially to the evaluating unit.

6. Device according to one or more of the claims 1 to 4, characterised thereby, that the storage cells (26) are arranged one beside the other in such a manner that they form endless charge-coupled device regions, in particular circular charge-coupled device regions.

7. Device according to one of the claims 1 to 6, characterised thereby, that the electrical switch (22) is constructed as transistor switch or as charge-coupled device transfer gate (27).

8. Method for the detection and demodulation of an intensity-modulated radiation field, wherein
- the radiation field is imaged by an optical system (12) onto an image sensor (13, 23) consisting of one-dimensionally or two-dimensionally arranged sensor elements (16),
- signal charges according to the intensity of the radiation field are produced one after the other in a light-sensitive part (17) of the sensor element (16) in a first phase, wherein the signal charges are integrated up each time during an integration interval (I),
- the respective integrated-up signal charges are each transferred into a lightinsensitive part (18) of the sensor element (16) synchronously with a modulation signal produced by the radiation source and each stored in a respective storage cell (21, 26),
- the signal charges produced in the light-sensitive part (17) are fed by the light-sensitive part of the sensor element (16) by way of at least one electrical switch (22), which is respectively associated with a storage cell (21, 26), of the corresponding storage cell (21, 26) and stored
- and the measurement values stored in the storage cells (21, 26) are read out one after the other and fed to an evaluating unit (15) in a second phase.

9. Method according to claim 8, characterised thereby, that an object (11) is illuminated by a periodic or pulse-shaped modulation signal produced by a radiation source and this object is imaged two-dimensionally as intensity-modulated radiation field on the image sensor (13) in such a manner that data about the shape and/or structure of the object are present.

10. Method according to claim 8 or 9, characterised thereby, that the signal charges are added up periodically each time in the storage cells (21, 26).

## Revendications

1. Dispositif pour la détection et la démodulation d'un champ de rayonnement dont l'intensité est modulée, présentant les caractéristique suivantes :
- un capteur d'image (13, 23) se composant d'un agencement uni- ou bidimensionnel d'éléments capteurs (16),
- chaque élément capteur (16) se compose d'une partie (17) sensible à la lumière pour la transformation du signal de rayonnement en un signal électrique et d'une partie (18) insensible à la lumière avec au moins un commutateur électrique (22) et avec au moins une cellule de mémoire (21, 26) à chaque fois affectée au commutateur (22),
- un générateur de synchronisation (14) pour la commande des commutateurs électriques de façon que les charges de signaux produites dans la partie (17) sensible à la lumière soient commutées en synchronisme avec un signal de modulation produit par une source de rayonnement dans les cellules de mémoire (21, 26) et pour la commande des cellules de mémoire (21, 26) de manière que chaque valeur de mesure mémorisée dans les cellules de mémoire (21, 26) soit transmise dans une unité d'évaluation (15) pour l'évaluation de la valeur de mesure.

2. Dispositif selon la revendication 1, **caractérisé en ce que** le capteur d'image (13, 23) est configuré en une pièce, et les éléments capteurs (16) se trouvent directement les uns à côté des autres et forment un champ uni- ou bidimensionnel.

3. Dispositif selon l'une des revendications 1 ou 2, **caractérisé en ce que** la partie (17) sensible à la lumière de l'élément capteur (16) est configurée comme une photodiode ou comme un condensateur MOS (24) avec polarisation.

4. Dispositif selon une ou plusieurs des revendications 1 à 3, **caractérisé en ce que** la cellule de mémoire (21) est configurée en tant qu'élément d'image à CCD protégé de la lumière ou bien en tant que condensateur MOS.

5. Dispositif selon une ou plusieurs des revendications 1 à 4, **caractérisé en ce que** les cellules de mémoire (26) forment des zones à CCD (25, 28) en forme de ligne, en particulier des zones à CCD (25, 28) en ligne droite, d'où les valeurs de mesure mémorisées sont transmises séquentiellement à l'unité d'évaluation.

6. Dispositif selon une ou plusieurs des revendications 1 à 4, **caractérisé en ce que** les cellules de mémoire (26) sont agencées côte à côte de façon à former des zones à CCD fermées, en particulier des zones à CCD de forme circulaire.

7. Dispositif selon l'une des revendications 1 à 6, **caractérisé en ce que** le commutateur électrique (22) est configuré comme un commutateur à transistor ou bien comme une porte de transfert à CCD (27).

8. Procédé pour la détection et la démodulation d'un champ de rayonnement modulé en intensité où
- le champ de rayonnement est reproduit par une optique (12) sur un capteur d'image (13, 23) se composant d'éléments capteurs (16) en agencement uni- ou bidimensionnel,
- dans une première phase dans une partie sensible à la lumière (17) de l'élément capteur (16), des charges subséquentes de signaux correspondant à l'intensité du champ de rayonnement sont produites, et à chaque fois pendant un intervalle d'intégration I, les charges de signaux sont intégrées,
- les charges de signaux intégrées à chaque fois sont transmises en synchronisme avec un signal de modulation produit par la source de rayonnement dans une partie (18) insensible à la lumière de l'élément capteur (16) et sont à chaque fois mémorisées dans une cellule de mémoire (21, 26),
- les charges de signaux produites dans la partie (17) sensible à la lumière sont conduites séquentiellement de la partie sensible à la lumière de l'élément capteur (16) par au moins un commutateur électrique (22) affecté à chaque cellule de mémoire (21, 26) de la cellule de mémoire (21, 26) correspondante et y sont mémorisées,
- et dans une seconde phase, les valeurs de mesure mémorisées dans les cellules de mémoire (21, 26) sont lues les unes après les autres et sont conduites à une unité d'évaluation (15).

9. Procédé selon la revendication 8, **caractérisé en ce qu'**un objet (11) est éclairé par un signal de modulation périodique ou impulsionnel produit par une source de rayonnement et celui-ci est reproduit, en tant que champ de rayonnement dont l'intensité est modulée, sur le capteur d'image (13) bidimensionnellement de manière que l'on dispose d'informations concernant la forme et/ou la structure de l'objet.

10. Procédé selon la revendication 8 ou 9, **caractérisé en ce que** les charges de signaux sont additionnées à chaque fois périodiquement dans les cellules de mémoire (21, 26).
